(19) Europäisches Patentamt
European Patent Office
Office européen des brevets

(11) Publication number: **0 469 491 B1**

(12) # EUROPEAN PATENT SPECIFICATION

(45) Date of publication of patent specification: **25.01.95**

(51) Int. Cl.⁶: **C09D 5/44**, C08L 63/00, C08L 61/32, C09D 163/00

(21) Application number: **91112653.0**

(22) Date of filing: **27.07.91**

(54) **Low temperature curable anionic electrodepositable compositions.**

(30) Priority: **03.08.90 US 562349**
**10.06.91 US 712783**

(43) Date of publication of application:
**05.02.92 Bulletin 92/06**

(45) Publication of the grant of the patent:
**25.01.95 Bulletin 95/04**

(84) Designated Contracting States:
**AT BE DE ES FR GB IT NL SE**

(56) References cited:
**EP-A- 0 174 628**
**EP-A- 0 188 689**

(73) Proprietor: **PPG INDUSTRIES, INC.**
**One PPG Place**
**Pittsburgh**
**Pennsylvania 15272 (US)**

(72) Inventor: **Jones, James E.**
**197 Cooper Road**
**Cabot, PA 16023 (US)**
Inventor: **Seiner, Jerome A.**
**5415 Plainfield Street**
**Pittsburgh, PA 15217 (US)**

(74) Representative: **Sternagel, Hans-Günther, Dr. et al**
**Patentanwälte Dr. Michael Hann, Dr. H.-G. Sternagel, Dr. H. Dörries,**
**Sander Aue 30**
**D-51465 Bergisch Gladbach (DE)**

**EP 0 469 491 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to low temperature curable compositions. More specifically the present invention relates to low temperature curable anionic electrodepositable compositions containing a phosphated epoxy resin and an aminoplast resin.

Brief Description of the Prior Art: There has been a long-felt but unmet need for low temperature curable compositions that cure at temperatures of 107,2°C (225°F) or lower over a commercially acceptable cure time of 60 minutes. In particular, there has been a need for water-based low VOC (volatile organic content) coatings. The need has become more acute with the increased use of thermally sensitive materials such as plastics, especially in pre-assembled parts. Coating compositions useful for parts which are composed of thermally sensitive materials should cure at threshold temperatures of 107,2°C (225°F) or lower over a cure time of 60 minutes or less. Heretofore, art-known water-based compositions have not been known to cure at said threshold temperatures. More pertinently, art-known electrodepositable compositions containing phosphated epoxy resins have not been known to cure at said threshold temperatures.

EP-A-0 188 689 discloses aqueous coating compositions which comprise a blend of a phosphated epoxy and a further resin which can be an acrylic resin. The blend can also contain an aminoplast resin.

EP-A-0 174 628 discloses an electrodepositable composition for can coatings which are a combination of phosphated epoxy resins and an acid-group containing vinyl addition resin. The blend can also contain an aminoplast resin.

However, the art has heretofore not harnessed the essential features of the components of an anionic electrodepositable composition containing phosphated epoxy resins to produce the remarkable properties of low temperature cure, solvent resistance, corrosion resistance and color control.

It is the object of the present invention to provide low temperature curable anionic electrodepositable compositions comprising phosphated epoxy resins which can produce films which are solvent resistant, corrosion resistant, and non-yellowing.

This object is attained by a curable, anionic electrodepositable composition comprising an aqueous dispersion of a base-neutralized resinous composition containing: (a) 50 to 90 weight percent of a phosphated epoxy resin on a resin solids basis, (b) 10 to 50 weight percent of an aminoplast resin, based on total resin solid characterized in that the aminoplast resin (b) having substituted thereon a combination of low alkoxy groups having 1 to 2 carbon atoms and high alkoxy groups having 3 to 6 carbon atoms resulting in a low temperature curable, ultrafiltration insensitive coating composition.

In a preferred embodiment of the invention, the resinous composition further contains a resinous adjunct which is an acrylic resin.

Also encompassed by the invention is a process for providing a coating on a conductive substrate by passing an electric current between the substrate acting as an anode, and cathode in contact with an electrodeposition bath containing an aqueous dispersion of a base-neutralized resinous composition containing:

(a) 50 to 90 weight percent of a phosphated epoxy resin on a resin solids basis,
(b) 10 to 50 weight percent of an aminoplast resin based on total resin solid

**characterized by**

using an aminoplast resin (b) having substituted thereon a combination of low alkoxy groups having 1 to 2 carbon atoms and high alkoxy groups having 3 to 6 carbon atoms, and heating the coated substrate to a temperature of less than 107,2°C (225° Fahrenheit) over 20 to 60 minutes.

It is noteworthy that the anionic electrodepositable compositions of the present invention can be cured at the remarkably low temperatures of 107,2°C (225°F) or lower over a period of one hour or less, to produce hard and solvent resistant films. It is also noteworthy that the cured films do not yellow upon overbake. In accordance with this invention, "cure" is defined by an instance of a pencil hardness of equal to or greater than "F" and "acetone double-rub" of equal to or greater than 25, when a film of the composition is baked for 20 minutes at 88,2°C (180°F) to produce a tack-free film.

The phosphated epoxy resin is employed herein as a film-former in an amount sufficient to produce a corrosion resistant coating. Typically, the phosphated epoxy resin is present in an amount of 50 to 90 percent by weight and preferably from 60 to 75 percent by weight based on total resin solids. Typically, the aminoplast resin is present in an amount of 10 to 50 percent, preferably 10 to 40 percent and most preferably 10 to 30 percent by weight solids based on total resin solid. These essential components of the claimed electrodepositable composition are further described below.

The phosphated epoxy resins useful herein are ungelled and can be prepared as follows. Typically, the preparation entails a reaction of an epoxy-containing material, such as a polyepoxide with phosphoric acid or an equivalent thereof. The polyepoxide useful herein can be a compound or a mixture of compounds

having more than 1.0 epoxy groups per molecule. Several polyepoxides are known in the art. Examples of the polyepoxides can be found in the Handbook of Epoxy Resins, Lee and Neville, 1967, McGraw-Hill Book Company.

A preferred class of polyepoxides are the polyglycidyl ethers of polyphenols, such as bisphenol A. These are produced by etherification of a polyphenol with an epichlorohydrin in the presence of an alkali. The phenolic compound can be 1,1-bis(4-hydroxyphenyl)ethane; 1,1-bis(4-hydroxyphenyl)isobutane; 2,2-bis-(4-hydroxytertiarybutylphenyl) propane; bis(2-hydroxynaphthyl)methane; 1,5-dihydroxynaphthalene; and 1,1-bis(4-hydroxy-3-allylphenyl)ethane. Another useful class of polyepoxides are produced similarly from polyphenol resins.

Also suitable are the similar polyglycidyl ethers of polyhydric alcohols which are derived from polyhydric alcohols such as ethylene glycol, diethylene glycol, triethylene glycol, 1,2-propylene glycol, 1,4-butylene glycol, 1,5-pentanediol, 1,2,6-hexanetriol, glycerol, and 2,2-bis(4-hydroxycyclohexyl)propane.

Cycloaliphatic polyepoxide resins can be used. These resins are prepared by epoxidation of cyclic olefins with organic peracids, e.g., peracetic acid.

Another useful class of polyepoxides are those containing oxyalkylene groups in the epoxy molecule. These oxyalkylene groups are of the general formula:

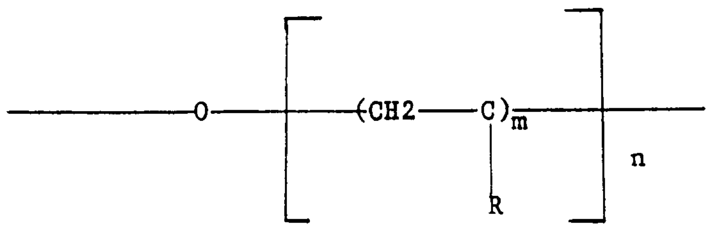

wherein R is hydrogen or an alkyl, preferably a lower alkyl (having 1 to 6 carbon atoms) and where, in most instances, m is 1 to 4 and n is 2 to 50. The oxyalkylene groups can be pendant to the main molecular chain of the polyepoxide or part of the main chain itself. The proportion of oxyalkylene groups in the polyepoxide depends upon many factors, including the chain length of the oxyalkylene group, the nature of the epoxy and the degree of modification desired.

In addition to the polyepoxides described above, there can also be employed addition polymerization polymers containing pendant epoxy groups. These polymers are made by copolymerizing a variety of polymerizable ethylenically unsaturated monomers at least one of which is an epoxy containing monomer e.g., glycidyl acrylate or glycidyl methacrylate.

A suitable ethylenically unsaturated monomer which does not contain a group that is reactive with the epoxy group can be employed herein as a comonomer. The preferred monomers include alpha, beta-ethylenically unsaturated monomers, e.g., unsaturated carboxylic acid esters of saturated alcohols containing from 1 to 8 carbon atoms, and monovinyl aromatic monomers such as styrene and vinyl toluene.

Also useful herein are hydantoin-based polyepoxide resins as described in U S -A- 4,110,287, issued August 29, 1978.

The preferred polyepoxides have epoxy equivalent weight of 172 to 5000 and preferably 300 to 1000.

The phosphoric acid that is reacted with the epoxy-containing material can be a 100 percent orthophosphoric acid or a phosphoric acid aqueous solution such as is referred to as an 85 percent phosphoric acid. Other forms of phosphoric acid such as superphosphoric acid, diphosphoric acid and triphosphoric acid can be employed herein. Also, the polymeric or partial anhydrides of phosphoric acids can be employed. Typically, aqueous phosphoric acids which are of 70 to 90 percent and preferably 85 percent phosphoric acid are employed.

In preparing the phosphated epoxy resin, the equivalent ratio of reactants is 0.1 to 1:1 and preferably 0.4 to 0.8:1 of phosphoric acid to the epoxy containing material. The method of preparing the phosphated epoxy is generally known in the art and is considered to be a part of this disclosure.

The phosphated epoxy resins useful herein can also be prepared by polymerizing phosphate functional ethylenically unsaturated monomers. For example, epoxy functional monomers, e.g., glycidyl acrylate or glycidyl methacrylate, can be reacted with phosphoric acid as described above with regard to polyepoxides. The phosphated epoxy monomers can then be polymerized or copolymerized with an ethylenically unsaturated monomer which does not contain a group which is reactive with the epoxy groups.

The resultant phosphated epoxy resin can be neutralized with a base to make it compatible with water. Illustratively, the phosphated epoxy resin can be neutralized with a base in the presence of water to form an

aqueous dispersion. Suitable bases include ammonia, primary, secondary and tertiary amines such as ethanolamine, diethanolamine, N-methylethanolamine, dimethylethanolamine, isopropanolamine, diisopropanolamine, methylamine, ethylamine, diethylamine, trimethylamine, triethylamine and morpholine.

The useful aminoplast resins of this invention are condensation products of an aldehyde, e.g., formaldehyde, acetaldehyde, crotonaldehyde, and benzaldehyde and an amino or amido group containing material such as urea, melamine, and benzoguanamine. Products obtained from the reaction of alcohols and formaldehyde with melamine, urea and benzoguanamine are preferred herein. In the presence of phosphated epoxy resins, the aminoplasts effect cure at low temperatures.

In accordance with preferred embodiments of the present invention, the useful aminoplast is characterized as having a combination of low alkoxy and high alkoxy groups or having either low alkoxy or high alkoxy groups. The low alkoxy group contains from 1 to 2 carbon atoms. Preferably, the low alkoxy group is a methoxy group. The low alkoxy group can be described as a leaving group of the aminoplast resin, in that it readily leaves the aminoplast resin, thus contributing to a low temperature cure. The high alkoxy group contains from 3 to 6 or higher carbon atoms and preferably from 3 to 4 carbon atoms. In accordance with the description of the invention, the high alkoxy group contributes to the water-insolubility and coat-out of the aminoplast resin. Illustrative but non-limiting examples of useful aminoplast resins having a combination of low and high alkoxy groups can be methylated/butylated melamine resins such as CYMEL® 1130 available from American Cyanamid Co. and RESIMENE® 753 available from Monsanto Co. Illustrative but non-limiting examples of useful aminoplast resins having high alkoxy groups can be butylated melamine resins such as CYMEL® 1156 available from American Cyanamid Co. and RESIMENE® 750 available from Monsanto Co. Illustrative but non-limiting examples of useful aminoplast resins having low alkoxy groups can be melamine resins such as CYMEL® 1116 available from American Cyanamid Co. and RESIMENE® 745 available from Monsanto Co.

In accordance with the present invention, the low temperature curable electrodepositable composition is preferably such that the aminoplast content would not vary significantly with ultrafiltration. Hence, the aminoplasts useful herein can be selected on the basis that in combination with other components of the electrodepositable composition, in particular the phosphated epoxy resin, the ratio of the aminoplast resin to the said components is substantially unaffected by ultrafiltration. Such electrodepositable compositions are referred to herein as ultrafiltration insensitive. In particular, compositions with aminoplasts having some higher alkoxy groups tend to be more ultrafiltration insensitive. To maintain an electrodeposition bath in proper working order, the bath contents must be subjected to ultrafiltration. The ultrafiltration process removes low molecular weight, water soluble components from the bath so that properties such as film thickness, throwpower and film appearance will remain constant as the bath continues to operate. For example, in an anionic electrodeposition bath, the solubilizing amine components of the bath must be removed and prevented from building up in the bath as polymeric components are coated out.

In some embodiments of the invention, a resinous adjunct can be employed in the low temperature curable compositions. A typical example of the resinous adjunct can be an acid-functional addition polymer. The preferred acid-functional addition polymer is an acrylic resin with an acid value sufficient to solubilize it upon neutralization with a base. The acid functional acrylic polymer can be prepared by a free radical initiated addition polymerization of ethylenically unsaturated monomers, at least one which contains an acid group or a precursor thereof. Illustrative but non-limiting examples of an ethylenically unsaturated monomer which contains an acid group can be an acrylic acid, methacrylic acid, crotonic acid, maleic acid, fumaric acid, a monoester of unsaturated dicarboxylic acid, e.g., methyl hydrogen maleate, and ethyl hydrogen fumarate, and the like.

Other monomers that can be copolymerized herein can be selected from a wide variety of materials depending upon the properties desired. For example, at least a portion of the other copolymerizable monomer can be a vinyl compound such as ethylene or propylene, a vinyl aromatic compound such as styrene, alpha-methyl styrene, tertiary butylstyrene, vinyltoluene and vinylxylene. Other monomers which are used are the alkyl esters of methacrylic acid which contain from 1 to 3 carbon atoms in the alkyl group. Specific examples of such esters are methyl methacrylate and ethyl methacrylate. Monomers which can be used and which provide flexibility to the coating are the alkyl esters of acrylic acid having from 2 to 12 carbon atoms in the alkyl group and alkyl esters of methacrylic acid having from 4 to 12 carbon atoms in the alkyl group. Examples of monomers of this type are ethyl acrylate, propyl acrylate, butyl acrylate, hexyl acrylate, 2-ethylhexyl acrylate, butyl methacrylate, and 2-ethylhexyl methacrylate. Also useful herein, is an ethylenically unsaturated monomer containing an N-(alkoxymethyl)amide. Examples thereof are N-(alkoxymethyl)acrylamides and N-(alkoxymethyl)methacrylamides having 1 to 4 carbon atoms in the alkoxy group. N-methylolacrylamide and N-(methylol)methacrylamide can also be used.

Still other monomers include the vinyl halides, vinylidene halides, vinyl versatate, vinyl acetate, dialkyl maleate, allyl chloride, allyl alcohol, 1,3-butadiene, 2-chlorobutene, methyl vinyl ether acrylamide, methacrylamide, acrylonitrile, methacrylonitrile and a hydroxyl functional monomer such as 2-hydroxylethyl acrylate. Mixtures of any of the above-described monomers can be used.

Mixtures of addition resins formed separately from different monomers can also be used.

The addition resins described above can be prepared by free radical initiated polymerization of a mixture of the copolymerizable monomers by solution polymerization techniques. Usually, the monomers are dissolved in a solvent or a mixture of solvents and polymerized until the free monomeric content is reduced to below 0.5 percent, preferably below 0.1 percent. Examples of free radical initiators include azobis(alpha-gamma)-dimethylvaleronitrile, tertiary-butyl perbenzoate, tertiary-butyl peracetate and benzoyl peroxide.

Solvents which can be used in the polymerization step include alcohols such as ethanol, tertiary butanol, teritary amyl alcohol; ketones such as acetone, methyl ethyl ketone; and ethers such as the dimethyl ether of ethylene glycol. Usually, the solvent is first heated to reflux and a mixture of the monomers and the free radical initiator are added simultaneously and slowly to the refluxing solvent. Additional catalyst is optionally added and the reaction mixture held at polymerizing temperatures so as to reduce the free monomer content of the reaction mixture.

In the present embodiments of the invention, the addition resin is optionally neutralized at least partially with a base before it is blended. Suitable bases include ammonia and primary, secondary or tertiary amines, e.g., ethanolamine, diethanolamine, isopropanolamine, N-methylethanolamine, demethylethanolamine, methylamine, ethylamine, diethylamine, trimethylamine, triethylamine and morpholine.

Other acid group-containing resins and for that matter other resinous adjuncts which are compatible with the phosphated epoxy resin in accordance with this invention are also encompassed hereby. The resinous adjunct can be employed in an amount ranging from 0 to 40 percent by weight based on total resin solids.

In some embodiments of the invention, a resinous adjunct such as the afore-described base-neutralized, acid functional acrylic resin can be employed as a coalescing agent. Consonantly, other coalescing agents such as coalescing solvents can be employed herein. Non-limiting examples of the coalescing solvents can be ethylene glycol mono 2-ethylhexyl ether, ethylene glycol monohexyl ether, diethylene glycol monobutyl ether and the like.

The present composition can also include the use of a phenolic resin, as is produced by the condensation of a phenol or substituted phenol with an aldehyde, such as formaldehyde, acetaldehyde or furfural. A preferred phenolic resin is Methylon® 75108. Phenolic resins are known to require relatively high cure temperatures. However, it has been surprisingly found that a phenolic resin can be useful in the present composition while still achieving low temperature cures. The incorporation of a phenolic resin in the present composition provides the added advantage of improved corrosion resistance. Specifically, the present composition can include between 2 weight percent and 20 weight percent and more preferably between 5 weight percent and 15 weight percent based on total weight of resin solids.

In preparing the low temperature curable composition of the invention, the above ingredients can be admixed in water in any convenient manner. Typical coating additives such as pigments, fillers, anti-oxidants, flow control agents, surfactants and the like can be employed herein.

In adapting the resinous composition to a be a water-based and electrophoretic composition, it is neutralized with a base. The bases useful herein can be organic or inorganic. Illustrative examples of the bases are ammonia, monoalkylamines, dialkylamines, or trialkylamines such as ethylamine, propylamine, dimethylamine, dibutylamine and cyclohexylamine; monoalkanolamine, dialkanolamine or trialkanolamine such as ethanolamine, diethanolamine, triethanolamine, propanolamine, isopropanolamine, diisopropanolamine, dimethylethanolamine and diethylethanolamine; morpholine, e.g., N-methylmorpholine or N-ethylmorpholine. The percent of neutralization is such as would make the resinous blends water-dispersible and electrophoretic. Typically, the resinous blend is at least partially neutralized from 40 to 150 percent and preferably 60 to 120 percent neutralization.

The electrodepositable compositions of this invention typically have a solids content of 5 to 25 percent and preferably 5 to 15 percent. In general, the electrodeposition bath has an operating bath conductivity within 200 to 3000 micromhos per centimeter and preferably within the range of 500 to 1500 micromhos per centimeter. The residence time of the substrate being coated in the bath is, in general, from 90 to 120 seconds. The substrates that can be electrocoated are, generally, electroconductive substrates. The substrates can be any conductive substrates including substrates pretreated with conversion coatings.

After electrocoating, the substrate is removed and then baked in an oven at a temperature and over a period sufficient to effect cure at a low temperature. Generally, the coated substrate is baked at

temperatures of 107,2 ° C (225 ° F) or lower and more preferably 93,3 ° C (200 ° F) or lower for 20-60 minutes. Typically the substrates can be cured 82,2 ° C (180 ° F) for 20 minutes to produce hard, solvent resistant and non-tacky films. If desired, the electrocoated substrates can be baked at higher temperatures of, say, 176,7 ° C (350 ° F). It is noteworthy that when baked at the higher temperatures, the coatings do not exhibit a significant color change in the form of say, yellowing.

These and other aspects of the claimed invention are further illustrated by the following non-limiting examples.

Example A-1

Preparation of Phosphated Epoxy Resin 1

| Ingredients | | Parts by weight (grams) |
|---|---|---|
| | Charge I | |
| Epon® 828[1] | | 953.1 |
| Bisphenol A[2] | | 306.4 |
| | Charge II | |
| Shell Catalyst[3] | | 0.95 |
| | Charge III | |
| Butyl Carbitol®[4] | | 269.9 |
| Ektasolve® EEH[5] | | 269.9 |
| | Charge IV | |
| 85% Phosphoric acid | | 53.0 |
| | Charge V | |
| Deionized Water | | 85.0 |
| | Charge VI | |
| Triethylamine | | 106.7 |
| | Charge VII | |
| Deionized Water | | 1706.0 |

[1] An epoxy resin having an epoxide equivalent weight of 189 which is available from Shell Chemical Company.

[2] 4,4' Isopropylidenediphenol available from Shell Chemical Company.

[3] Ethyltriphenylphosphonium Iodide

[4] Diethylene glycol monobutyl ether

[5] Ethylene glycol mono 2-ethylhexyl ether

Charge I was introduced into a properly equipped reaction vessel and heated to 108°C and held for 30 minutes to dissolve. At 110°C, Charge II was added and the reaction mixture heated to 130°C at which time the reaction became exothermic and reached a peak temperature of 194°C after 10 minutes. The reaction mixture was maintained at 180-190°C for 1 hour until an epoxy equivalent weight of 552 was obtained. Charge III was then added and the reaction mixture was cooled to 94°C. Charge IV was then

added and the reaction exothermed to 128 ° C over 5 minutes. The reaction mixture was then maintained for 30 minutes at 120-130 ° C. Charge V was then added and the reaction mixture maintained at 105-115 ° C for 2 hours. The reaction mixture was then cooled below 70 ° C and Charge VI was added. The reaction mixture was maintained at 70 ° C for 15 minutes followed by the addition of Charge VII over 45 minutes. Analysis: Viscosity was 63,000 mPa•s at 20 revolutions per minute (rpm) with a No. 7 spindle using a Brookfield RVT viscometer, pH was 9.57, solids content was 38.8%, milliequivalents of acid was 0.243 and milliequivalents of base was 0.272 per gram.

Example A-2

Preparation of Phosphated Epoxy Resin 2

| Ingredients | Parts by weight (grams) |
|---|---|
| **Charge I** | |
| Epon® 828 | 953.1 |
| Bisphenol A | 306.4 |
| **Charge II** | |
| Shell Catalyst | 0.95 |
| **Charge III** | |
| Butyl Carbitol® | 209.9 |
| Ektasolve® EEH | 209.9 |
| **Charge IV** | |
| 85% Phosphoric acid | 53.0 |
| **Charge V** | |
| Deionized Water | 85.0 |
| **Charge VI** | |
| Triethylamine | 106.7 |
| **Charge VII** | |
| Deionized Water | 1826.0 |

The phosphated epoxy resin was prepared according to essentially the same procedure as phosphated epoxy 1 except held to an epoxy equivalent weight of 532 before adding Charge III.

Analysis: Viscosity was 5820 mPa•s at 12 rpm with a No. 3 spindle using a Brookfield LVT viscometer, pH was 9.83, solids content was 38.9%, milliequivalents of acid was 0.229 and milliequivalents of base was 0.271 per gram.

Example A-3

Preparation of Phosphated Epoxy Resin 3

| Ingredients | | Parts by weight (grams) |
|---|---|---|
| | Charge I | |
| Epon® 1001[1] | | 1079.6 |
| Butyl Carbitol | | 179.9 |
| Ektasolve® EEH | | 179.9 |
| | Charge II | |
| 85% Phosphoric acid | | 45.4 |
| | Charge III | |
| Deionized Water | | 72.8 |
| | Charge IV | |
| Triethylamine | | 91.6 |
| | Charge V | |
| Deionized Water | | 1650.8 |

[1] An epoxy resin having an epoxide equivalent weight of 534 which is available from Shell Chemical Company.

Charge I was introduced into a properly equipped reaction vessel and heated to 100 °C until a uniform reaction mixture was obtained. Charge II was added and the reaction allowed to exotherm to a peak temperature of 140-145 °C. The reaction mixture was maintained for 0.5 hours at 120-130 °C. Charge III was then added and the reaction mixture maintained at 105-110 °C for 2 hours. The reaction mixture was then cooled below 70 °C and Charge IV was added. The reaction mixture was maintained at 70-80 °C for 15 minutes followed by the addition of Charge V while cooling.
Analysis: Viscosity was 1510 mPa•s at 12 rpm with a No. 3 spindle using a Brookfield LVT viscometer, pH was 9.59, solids content was 36.7%, milliequivalents of acid was 0.255, and milliequivalents of base was 0.264 per gram.

Example A-4

Preparation of Phosphated Epoxy Resin 4

| Ingredients | | Parts by weight (grams) |
|---|---|---|
| | Charge I | |
| Epon® 828 | | 190.60 |
| | Charge II | |
| Bisphenol A | | 61.30 |
| | Charge III | |
| Shell Catalyst | | 0.19 |
| Xylene | | 6.10 |
| | Charge IV | |
| Xylene | | 2.00 |
| | Charge V | |
| Xylene | | 2.00 |
| | Charge VI | |
| Butyl Carbitol | | 54.00 |
| Ektasolve® EEH | | 54.00 |
| | Charge VII | |
| 85% Phosphoric acid | | 10.60 |
| | Charge VIII | |
| Deionized Water | | 17.00 |
| | Charge IX | |
| Triethylamine | | 21.30 |
| | Charge X | |
| Deionized Water | | 41.00 |
| | Charge XI | |
| Deionized Water | | 300.00 |

Charge I was introduced to a properly equipped reaction vessel and heated to 104,4°C (220°F). Charge II is then added and the mixture maintained at 104,4-105,6°C (220°-222°F) for 35 minutes until completely dissolved. Charge III was added as a slurry and rinsed into the reaction vessel with Charge IV. The reaction mixture was then heated to 129,4°C (265°F) at which time the reaction became exothermic and reached a peak temperature of 191,1°C (376°F) after 15 minutes. Charge V was added and the mixture was maintained at 176,7-182,2°C (350°-360°F) for 90 minutes. Charge VI was then added and the reaction mixture was cooled to 93,3°C (200°F). An epoxy equivalent weight of 767 was obtained at this point. Charge VII was then added over 5 minutes and the reaction mixture exothermed to 125,6°C (258°F) over 15 minutes. The reaction mixture was then maintained at 115,6-121,1°C (240°-250°F) for 30 minutes. Charge VIII was then added over 10 minutes and the reaction mixture was maintained at 107,2-110°C (225°-230°F) for 2 hours. The reaction mixture was then cooled to 65,6°C (150°F) and Charge IX was added over 5 minutes. The reaction mixture was maintained for 15 minutes at 65,6-71,1°C (150°-160°F). Charges X and XI were then added over 30 minutes while the reaction mixture was allowed to cool.

Analysis: Viscosity was 7,400 mPa•s at 10 rpm with a No. 6 spindle using a Brookfield RVT viscometer, pH was 9.60, solids content was 38.2%, milliequivalents of acid was 0.249 and milliequivalents of base was 0.266 per gram.

Example A-5

Preparation of Epoxy Resin 1

| Ingredients | | Parts by weight (grams) |
|---|---|---|
| | Charge I | |
| Epon® 828 | | 709.5 |
| Bisphenol A | | 304.2 |
| Xylene | | 21.3 |
| | Charge II | |
| Shell Catalyst[1] | | 0.71 |
| | Charge III | |
| TOFA®[2] | | 571.3 |
| | Charge IV | |
| Sodium Carbonate | | 0.5 |
| Deionized Water | | 2.2 |
| | Charge V | |
| Maleinized TOFA®[3] | | 651.8 |
| | Charge VI | |
| Dowanol® PM[4] | | 257.8 |
| Hexyl Cellosolve[5] | | 139.5 |
| n Butanol | | 399.4 |
| | Charge VII | |
| Deionized Water | | 51.4 |
| Butanol | | 72.8 |

Charge VIII

| | |
|---|---|
| N,N-Diethylethanolamine | 194.4 |

Charge IX

| | |
|---|---|
| Cymel® 1156[6] | 267.0 |

1 Ethyltriphenylphosphonium Iodide

2 Tall Oil Fatty acid from Georgia Pacific

3 Maleinized Tall Oil Fatty acid from Freeman Chemical

4 Propylene glycol monomethylether from Dow Chemical

5 Ethylene glycol monohexylether from Union Carbide Corporation

6 Butylated Melamine Formaldehyde resin from American Cyanamid

Charge I was introduced into a properly equipped reaction vessel and heated to 110 °C to dissolve the Bisphenol A. Charge II was added and held for 15 minutes at 110 °C. The reaction mixture was then heated and allowed to exotherm reaching a maximum temperature of 164 °C. The reaction mixture was then maintained for 1 hour at 160-170 °C. Charge III was then added and a Barrett type distillation receiver installed to the reaction vessel. Charge IV was then added and the reaction mixture heated to 250 °C. The reaction was maintained at 250 °C while removing reaction generated water until an acid value of 3.7 was obtained (acid equivalent weight = 15,162). The reaction mixture was then cooled to 135 °C and Charge V was added. The reaction mixture was maintained at 135 °C until a Gardner-Holdt viscosity of Q-R (50/50 in Dowanol® PM) was obtained. Charge VI was then added and the reaction mixture cooled to 95 °C. Charge VII was then added and maintained at 95 °C for 0.5 hours. Charge VIII and Charge IX were then added and the reaction mixture allowed to cool.
Analysis: Viscosity was 15,600 mPa•s at 20 rpm with a No. 6 spindle using a Brookfield RVT viscometer, solids content was 67%, milliequivalents of acid was 0.864, and milliequivalents of base was 0.461 per gram.

Example B-1

Preparation of Acrylic Resin 1

| Ingredients | Parts by weight (grams) |
|---|---|
| **Charge I** | |
| Butyl Carbitol | 892.6 |
| n Butyl alcohol | 37.1 |
| **Charge II** | |
| Ethylacrylate | 1711.2 |
| 60% solution of n Butoxy Methacrylamide[1] | 807.8 |
| Methacrylic acid | 168.0 |
| Styrene | 24.0 |
| **Charge III** | |
| Butyl Carbitol | 74.1 |
| t-Butyl perbenzoate | 24.0 |
| **Charge IV** | |
| Butyl Carbitol | 14.8 |
| t-Butyl perbenzoate | 8.3 |
| **Charge V** | |
| Butyl Carbitol | 14.8 |
| t-Butyl perbenzoate | 8.3 |
| **Charge VI** | |
| Butyl Carbitol | 18.5 |

[1] Available from American Cyanamid Co.

Charge I was introduced into a properly equipped reaction vessel and heated to 145°C. Charge II and III were then added simultaneously over 3 hours at 135-145°C. Charge IV was then added and the reaction mixture maintained at 130-135°C for 1.5 hours. Charge V followed by Charge VI were then added and the reaction mixture was maintained at 130-135°C for an additional 1.5 hours.

Analysis: Viscosity was 6280 mPa•s, solids content was 64.8%, and milliequivalents of acid was 0.517 per gram.

Example B-2

Preparation of Acrylic Resin 2

| Ingredients | Parts by weight (grams) |
|---|---|
| **Charge I** | |
| Butyl Cellosolve[1] | 450.3 |
| Deionized Water | 44.1 |
| **Charge II** | |
| 2-Hydroxyethyl acrylate | 188.8 |
| Styrene | 491.2 |
| n Butyl acrylate | 968.8 |
| Methacrylic acid | 140.7 |
| t-dodecyl mercaptan | 57.6 |
| t-butyl perbenzoate | 16.4 |
| Butyl Cellosolve[1] | 70.4 |
| **Charge III** | |
| Butyl Cellosolve[1] | 43.4 |
| Deionized Water | 39.7 |
| Diisopropanol amine | 4.9 |
| AMPS Monomer[2] | 8.7 |
| **Charge IV** | |
| t-butyl perbenzoate | 8.7 |
| Butyl Cellosolve[1] | 12.2 |
| **Charge V** | |
| Cymel® 1130[3] | 239.5 |
| Diisopropanol amine | 165.0 |

[1] Ethyleneglycol monobutyl ether

[2] 2-Acrylamido-2-Methylpropanesulfonic acid available from Lubrizol Co.

[3] Methylated/Butylated Melamine formaldehyde resin available from American Cyanamid Co.

Charge I was introduced into a properly equipped reaction vessel and heated to reflux. Charge II and Charge III were added simultaneously over 3 hours at 105°C. The reaction mixture was maintained at reflux for 0.5 hours followed by the addition of 1/3 of Charge IV followed by another hold time of 1 hour at reflux. The second 1/3 portion of Charge IV was then added and the reaction mixture maintained for 1 hour at reflux. The final 1/3 portion of Charge IV was then added followed by a 1 hour time at reflux. The reaction mixture was then cooled to 90°C and Charge V was added. The reaction mixture was then maintained at 90°C for an additional hour.

Analysis: Solids content was 72.2%, milliequivalents of acid was 0.629 and milliequivalents of base was 0.437 per gram.

Example B-3

Preparation of Phosphated Acrylic Resin 1

| Ingredients | | Parts by weight (grams) |
|---|---|---|
| | Charge I | |
| Propasol® B[1] | | 147.5 |
| Deionized Water | | 20.8 |
| | Charge II | |
| Butyl acrylate | | 416.2 |
| Styrene | | 25.1 |
| Hydroxypropylmethacrylate | | 100.0 |
| Methylmethacrylate | | 310.0 |
| Glycidylmethacrylate | | 150.4 |
| t-dodecyl mercaptan | | 65.6 |
| Vazo® 67[2] | | 27.2 |
| Propasol® B | | 73.2 |
| | Charge III | |
| Lupersol® 555[3] | | 6.8 |
| Propasol® B | | 47.8 |
| | Charge IV | |
| 85% Phosphoric acid | | 120.8 |
| Deionized Water | | 5.1 |

1 propyleneglycol monobutyl ether

2 2,2'-Azobis-(2-methylbutyronitrile) available from DuPont

3 t-amylperoxyacetate available from Pennwalt

Charge I was introduced into a properly equipped reaction vessel and heated to reflux. Charge II was then added over about 3 hours at 90-120 °C. The reaction mixture was then maintained for 0.5 hours at 120-125 °C followed by the addition of 1/2 of Charge III. The reaction mixture was maintained at 120-125 °C for 0.5 hours followed by the addition of the remainder of Charge III. The reaction mixture was maintained for an additional 0.5 hours at 120-125 °C and then cooled to 70 °C. Charge IV was then added and the reaction mixture exothermed to 94 °C over 5 minutes. The reaction mixture was then maintained at 90 °C for an additional 2 hours.

Analysis: Solids was 77.9% and milliequivalents acid was 1.514 per gram.

Example C-1

Preparation of Pigment Paste 1 (using acrylic resin 1)

| Ingredients | | Parts by weight (grams) |
|---|---|---|
| | Charge I | |
| Acrylic Resin 1 | | 625 |
| | Charge II | |
| Butyl Cellosolve | | 200 |
| | Charge III | |
| Yellow Iron Oxide[1] | | 400 |
| Titanium Dioxide[2] | | 200 |
| Clay[3] | | 400 |
| | Charge IV | |
| Butyl Cellosolve | | 50 |

[1] Bayferrox® 1420M/LV Yellow Iron Oxide available from Mobay Co.

[2] R-900-39/76 Rutile $TiO_2$ available from DuPont Co.

[3] ASP-170 Aluminum Silicate Clay available from Englehard Corporation.

Charge I and Charge II were introduced into a properly equipped media mill. Charge III was then added to the mill and stirred until a uniform mixture was obtained. Suitable grinding media was then added and stirring continued until a Hegman grind of greater than 7 was obtained. Charge IV was added as a final rinse for the mill.

Analysis: Total solids content was 74.6%, resin solids was 21.3%, and pigment solids was 53.3%.

Example C-2

Preparation of Pigment Paste 2 (using Acrylic Resin 2)

| Ingredients | | Parts by weight (grams) |
|---|---|---|
| | Charge I | |
| Acrylic Resin 2 | | 735.1 |
| | Charge II | |
| Diisopropanol amine | | 30.8 |
| Butyl Cellosolve | | 415.6 |
| | Charge III | |
| Yellow Iron Oxide[1] | | 500.2 |
| Titanium Dioxide[2] | | 250.2 |
| Clay[3] | | 500.2 |
| | Charge IV | |
| Butyl Cellosolve | | 40.0 |

1 Bayferrox® 1420M Yellow Iron Oxide available from Mobay Co.

2 R-900-39/76 Rutile $TiO_2$ available from DuPont Co.

3 ASP-170 Aluminum Silicate Clay available from Englehard Corporation.

Charge I and Charge II were introduced into a properly equipped media mill. Charge III was then added to the mill and stirred until a uniform mixture was obtained. Suitable grinding media was then added and stirring continued until a Hegman grind of greater than 7 was obtained. Charge IV was added as a final rinse for the mill.

Analysis: Total solids content was 71.4%, resin solids was 20.8%, and pigment solids was 50.6%.

Example C-3

Preparation of Pigment Paste 3 (using acrylic resin 1)

| Ingredients | | Parts by weight (grams) |
|---|---|---|
| | Charge I | |
| Acrylic Resin 1 | | 312.5 |
| | Charge II | |
| Butyl Cellosolve | | 100.0 |
| | Charge III | |
| Yellow Iron Oxide[1] | | 200.0 |
| Titanium Dioxide[2] | | 100.0 |
| Clay[3] | | 100.0 |
| | Charge IV | |
| Butyl Cellosolve | | 100.0 |

[1] Yellow Iron Oxide 1103 available from Mineral Pigments Corp.

[2] R-900-39/76 Rutile $TiO_2$ available from DuPont Co.

[3] ASP-200 China Clay available from Englehard Corporation.

Charge I and Charge II were introduced into a properly equipped media mill. Charge III was then added to the mill and stirred until a uniform mixture was obtained. Suitable grinding media was then added and stirring continued until a Hegman grind of greater than 7 was obtained. Charge IV was added as a final rinse for the mill.

Analysis: Total solids content was 69.4%, resin solids was 20%, and pigment solids was 49.4%.

Example C-4

Preparation of Pigment Paste 4 (using Acrylic Resin 2)

| Ingredients | | Parts by weight (grams) |
|---|---|---|
| | Charge I | |
| Acrylic Resin 2 | | 2580.5 |
| | Charge II | |
| Diisopropanol amine | | 111.1 |
| Butyl Cellosolve | | 1096.4 |
| | Charge III | |
| Yellow Iron Oxide[1] | | 1806.7 |
| Titanium Dioxide[2] | | 903.6 |
| Clay[3] | | 1806.7 |
| | Charge IV | |
| Butyl Cellosolve | | 181.0 |
| | Charge V | |
| Butyl Cellosolve | | 270.0 |
| | Charge VI | |
| Butyl Cellosolve | | 181.0 |

[1] Yellow Iron Oxide 1103 available from Mineral Pigments Corp.

[2] R-900-39/76 Rutile $TiO_2$ available from DuPont Co.

[3] ASP-200 China Clay available from Englehard Corporation.

Charge I and Charge II were introduced into a properly equipped mixing vessel. Charge III was then added to the vessel and stirred until a uniform mixture was obtained. The mixture was then transferred to a properly equipped media mill using Charge IV as a rinse for the mixing vessel. Charge V was added to the media mill to adjust viscosity and suitable grinding media was added. Stirring was continued until a Hegman grind of greater than 7 was obtained. Charge VI was added as a final rinse for the mill.
Analysis: Total solids content was 70.9%, resin solids was 20.4%, and pigment solids was 50.5%.

Example C-5

Preparation of Pigment Paste 5 (using Acrylic Resin 2)

| Ingredients | Parts by weight (grams) |
|---|---|
| **Charge I** | |
| Acrylic Resin 2 | 277.7 |
| **Charge II** | |
| Diisopropanol amine | 11.7 |
| Butyl Cellosolve | 110.0 |
| **Charge III** | |
| Yellow Iron Oxide[1] | 200.0 |
| Titanium Dioxide[2] | 100.0 |
| Clay[3] | 200.0 |
| **Charge IV** | |
| Butyl Cellosolve | 40.0 |
| **Charge V** | |
| Butyl Cellosolve | 20.0 |

[1] Yellow Iron Oxide 1103 available from Mineral Pigments Corp.

[2] R-900-39/76 Rutile $TiO_2$ available from DuPont Co.

[3] ASP-200 China Clay available from Englehard Corporation.

Charge I and Charge II were introduced into a properly equipped media mill. Charge III was then added to the mill and stirred until a uniform mixture was obtained. Charge IV was then added to adjust viscosity and suitable grinding media was added. Stirring was continued until a Hegman grind of greater than 7 was obtained. Charge V was added as a final rinse for the mill.
Analysis: Total solids content was 72.9%, resin solids was 20.8%, and pigment solids was 52.1%.

Example C-6

Preparation of Pigment Paste 6 (using Epoxy Resin 1)

| Ingredients | | Parts by weight (grams) |
|---|---|---|
| | Charge I | |
| Epoxy Resin 1 | | 373.1 |
| | Charge II | |
| N,N-diethylethanolamine | | 32.8 |
| Deionized Water | | 339.6 |
| | Charge III | |
| Carbon Black[1] | | 140.4 |
| Clay[2] | | 109.6 |
| | Charge IV | |
| n-butanol | | 4.1 |
| Deionized Water | | 50.0 |

[1] Raven 1200 Black (Powder) from Columbian Chemical Co.

[2] ASP-170 Aluminum Silicate Clay from Englehard Corp.

Charge I and Charge II were introduced into a properly equipped media mill. Charge III was then added to the mill and stirred until a uniform mixture was obtained. Suitable grinding media was then added and stirring continued until a Hegman grind of greater than 7 was obtained. Charge IV was added as a final rinse for the mill.

Analysis: Total solids content was 47.64%, resin solids was 23.82%, and pigment solids was 23.82%.

Example C-7

Preparation of Pigment Paste 7 (using Acrylic Resin 2)

| Ingredients | | Parts by weight (grams) |
|---|---|---|
| | Charge I | |
| Acrylic Resin 2 | | 321.7 |
| | Charge II | |
| Diisopropanol amine | | 19.6 |
| Butyl Cellosolve | | 186.1 |
| | Charge III | |
| Titanium Dioxide[1] | | 872.3 |
| Clay[2] | | 96.9 |
| Slip-Ayd[3] | | 17.5 |
| | Charge IV | |
| Butyl Cellosolve | | 20.0 |

[1] R-900-39/76 Rutile $TiO_2$ available from DuPont Co.

[2] ASP-170 Aluminum Silicate Clay from Englehard Corp.

[3] Slip-Ayd EX578-358 from Daniel Products Company

Charge I and Charge II were introduced into a properly equipped media mill. Charge III was then added to the mill and stirred until a uniform mixture was obtained. Suitable grinding media was then added and stirring continued until a Hegman grind of greater than 7 was obtained. Charge IV was added as a final rinse for the mill.

Analysis: Total solids content was 78.3%, resin solids was 15.1%, and pigment solids was 63.2%.

Example C-8

Preparation of Pigment Paste 8 (using Acrylic Resin 2)

| Ingredients | Parts by weight (grams) |
|---|---|
| **Charge I** | |
| Acrylic Resin 2 | 600.0 |
| **Charge II** | |
| Butyl Cellosolve | 300.0 |
| **Charge III** | |
| Titanium Dioxide[1] | 420.0 |
| Yellow Iron Oxide[2] | 630.0 |
| **Charge IV** | |
| Butyl Cellosolve | 150.0 |

[1] R-900-39/76 Rutile $TiO_2$ available from DuPont Co.
[2] Bayferrox® 1420M Yellow Iron Oxide available from Mobay Co.

Charge I and Charge II were introduced into a properly equipped media mill. Charge III was then added to the mill and stirred until a uniform mixture was obtained. Suitable grinding media was then added and stirring continued until a Hegman grind of greater than 7 was obtained. Charge IV was added as a final rinse for the mill. Analysis: Total solids content was 70.0%, resin solids was 20.0% and pigment solids was 50.0%.

Example 1

Preparation of Electrocoat Bath 1

| Ingredients | Parts by weight (grams) |
|---|---|
| Phosphated Epoxy Resin 1 | 608.0 |
| Cymel® 1130[1] | 45.6 |
| Acylic Resin 1 | 23.7 |
| Pigment Paste 3 | 153.8 |
| Deionized Water | 2968.8 |

[1] Methyalated/Butylated Maelamine resin from American Cyamid Co.

The electrocoat bath had a theoretical pigment to binder ratio of 0.25/1.0, solids content of 10%, pH of 8.4, and a conductivity of 1,300 micromhos per centimeter. The bath was ultrafiltered to a final conductivity of 860 micromhos per centimeter.

Example 2

| Preparation of Electrocoat Bath 2 | |
|---|---|
| Ingredients | Parts by weight (grams) |
| Phosphated Epoxy Resin 1 | 564.5 |
| Cymel® 1130 | 45.6 |
| Acrylic Resin 2 | 42.0 |
| Pigment Paste 2 | 151.1 |
| Deionized Water | 2996.8 |

The electrocoat bath had a theoretical pigment to binder ratio of 0.25/1.0, solids content of 10%, pH of 9.0, and a conductivity of 1125 micromhos per centimeter. The bath was ultrafiltered to a final bath conductivity of 775 micromhos per centimeter and a pH of 9.7.

Example 3

| Preparation of Electrocoat Bath 3 | |
|---|---|
| Ingredients | Parts by weight (grams) |
| Phosphated Epoxy Resin 1 | 521.1 |
| Cymel® 1130 | 45.6 |
| Acrylic Resin 2 | 71.1 |
| Pigment Paste 3 | 153.8 |
| Deionized Water | 3008.4 |

The electrocoat bath had a theoretical pigment to binder ratio of 0.25/1.0, solids content of 10%, pH of 8.15, and a conductivity of 1,100 micromhos per centimeter. The bath was ultrafiltered to a final pH of 8.3 and a conductivity of 530 micromhos per centimeter.

Example 4

| Preparation of Electrocoat Bath 4 | |
|---|---|
| Ingredients | Parts by weight (grams) |
| Phosphated Epoxy Resin 1 | 342.9 |
| Cymel® 1130 | 16.0 |
| Acrylic Resin 1 | 12.3 |
| Pigment Paste 4 | 80.6 |
| Deionized Water | 1548.2 |

The electrocoat bath had a theoretical pigment to binder ratio of 0.25/1.0, solids content of 10%, pH of 8.9, and a conductivity of 1,525 micromhos per centimeter. The bath was ultrafiltered to a final pH of 9.15 and a conductivity of 610 micromhos per centimeter.

Example 5

| Preparation of Electrocoat Bath 5 | |
|---|---|
| Ingredients | Parts by weight (grams) |
| Phosphated Epoxy Resin 1 | 608.0 |
| Cymel® 1130 | 45.6 |
| Acrylic Resin 1 | 23.3 |
| Pigment Paste 4 | 153.2 |
| Deionized Water | 2969.9 |

The electrocoat bath had a theoretical pigment to binder ratio of 0.25/1.0, solids content of 10%, pH of 9.2, and a conductivity of 1,250 micromhos per centimeter. The bath was ultrafiltered to a final pH of 9.0 and a conductivity of 640 micromhos per centimeter.

Example 6

| Preparation of Electrocoat Bath 6 | |
|---|---|
| Ingredients | Parts by weight (grams) |
| Phosphated Epoxy Resin 1 | 297.1 |
| Cymel® 1130 | 32.0 |
| Acrylic Resin 1 | 12.3 |
| Pigment Paste 4 | 80.6 |
| Deionized Water | 1578.0 |

The electrocoat bath had a theoretical pigment to binder ratio of 0.25/1.0, solids content of 10%, pH of 8.9, and a conductivity of 1,350 micromhos per centimeter. The bath was ultrafiltered to a final pH of 8.8 and a conductivity of 590 micromhos per centimeter.

Comparative Example 7 (C-7)

| Preparation of Electrocoat Bath 7 | |
|---|---|
| Ingredients | Parts by weight (grams) |
| Phosphated Epoxy Resin 1 | 320.0 |
| Beetle® 80[1] | 25.0 |
| Acrylic Resin 1 | 12.3 |
| Pigment Paste 4 | 80.6 |
| Deionized Water | 1562.1 |

[1] Butylated Urea Formaldehyde resin available from American Cyanamid.

The electrocoat bath had a theoretical pigment to binder ratio of 0.25/1.0, solids content of 10%, pH of 8.9, and a conductivity of 1,400 micromhos per centimeter. The bath was ultrafiltered to a final pH of 8.8 and a conductivity of 650 micromhos per centimeter.

Comparative Example 8

| Preparation of Electrocoat Bath 8 | |
|---|---|
| Ingredients | Parts by weight (grams) |
| Phosphated Epoxy Resin 1 | 320.0 |
| Cymel® 1156[1] | 24.0 |
| Acrylic Resin 1 | 11.6 |
| Pigment Paste 2 | 79.5 |
| Deionized Water | 1564.9 |

[1] Butylated Melamine Formaldehyde resin available from American Cyanamid.

The electrocoat bath had a theoretical pigment to binder ratio of 0.25/1.0, solids content of 10%, pH of 9.10, and a conductivity of 990 micromhos per centimeter. The bath was ultrafiltered to a final pH of 9.0 and a conductivity of 650 micromhos per centimeter.

Example 9

| Preparation of Electrocoat Bath 9 | |
|---|---|
| Ingredients | Parts by weight (grams) |
| Phosphated Epoxy Resin 2 | 287.2 |
| Resimene® 753[1] | 24.0 |
| Acrylic Resin 1 | 12.3 |
| Pigment Paste 5 | 76.6 |
| Deionized Water | 1595.0 |

[1] Methylated/Butylated Melamine resin available from Monsanto.

The electrocoat bath had a theoretical pigment to binder ratio of 0.25/1.0, solids content of 10%, pH of 9.05, and a conductivity of 960 micromhos per centimeter. The bath was ultrafiltered to a final pH of 8.85 and a conductivity of 670 micromhos per centimeter.

Example 10

| Preparation of Electrocoat Bath 10 | |
|---|---|
| Ingredients | Parts by weight (grams) |
| Phosphated Epoxy Resin 1 | 321.2 |
| Slip-Ayd[1] | 1.9 |
| Diisopropanolamine | 2.6 |
| Cymel® 1130 | 24.5 |
| Butyl Carbitol | 9.0 |
| Pigment Paste 6 | 68.7 |
| Deionized Water | 1374.0 |

[1] Slip-Ayd EX 578-358 from Daniel Products Company.

The electrocoat bath had a theoretical pigment to binder ratio of 0.10/1.0, solids content of 10%, pH of 9.75, and a conductivity of 1,936 micromhos per centimeter. The bath was ultrafiltered to a final pH of 8.35 and a conductivity of 1,127 micromhos per centimeter.

Example 11

| Preparation of Electrocoat Bath 11 | |
|---|---|
| Ingredients | Parts by weight (grams) |
| Phosphated Epoxy Resin 3 | 290.1 |
| Cymel® 1130 | 22.8 |
| Acrylic Resin 1 | 35.1 |
| Pigment Paste 7 | 65.4 |
| Deionized Water | 1586.6 |

The electrocoat bath had a theoretical pigment to binder ratio of 0.25/1.0, solids content of 10%, pH of 8.5, and a conductivity of 1,000 micromhos per centimeter. The bath was ultrafiltered to a final pH of 8.7 and a conductivity of 640 micromhos per centimeter.

Example 12

| Preparation of Electrocoat Bath 12 | |
|---|---|
| Ingredients | Parts by weight (grams) |
| Phosphated Epoxy Resin 4 | 228.6 |
| Cymel® 1130 | 24.0 |
| Methylon 75108[1] | 16.0 |
| Acrylic Resin 2 | 34.3 |
| Pigment Paste 8 | 80.0 |
| Deionized Water | 1617.1 |

[1] Phenolic resin from OXY Petrochemicals, Inc.

The electrocoat bath had a theoretical pigment to binder ratio of 0.25/1.0, solids content of 10%, pH of 8.7, and a conductivity of 1,000 micromhos per centimeter. The bath was ultrafiltered to a final conductivity of 560 micromhos per centimeter and a pH of 8.7.

Comparative Example 13

| Preparation of Electrocoat Bath 13 | |
|---|---|
| Ingredients | Parts by weight (grams) |
| Phosphated Epoxy Resin 4 | 228.6 |
| Cymel® 1156 | 24.0 |
| Methylon 75108 | 16.0 |
| Acrylic Resin 2 | 34.3 |
| Pigment Paste 8 | 80.0 |
| Deionized Water | 1617.1 |

The electrocoat bath had a theoretical pigment to binder ratio of 0.25/1.0, solids content of 10%, pH of 8.6, and a conductivity of 1,070 micromhos per centimeter. The bath was ultrafiltered to a final conductivity of 510 micromhos per centimeter and a pH of 8.35.

Example 14

| Preparation of Electrocoat Bath 14 | |
|---|---|
| Ingredients | Parts by weight (grams) |
| Phosphated Epoxy Resin 4 | 297.1 |
| Cymel® 1130 | 32.0 |
| Acrylic Resin 2 | 11.4 |
| Pigment Paste 8 | 80.0 |
| Deionized Water | 1579.4 |

The electrocoat bath had a theoretical pigment to binder ratio of 0.25/1.0, solids content of 10%, pH of 8.55, and a conductivity of 1,370 micromhos per centimeter. The bath was ultrafiltered to a final conductivity of 650 micromhos per centimeter and a pH of 8.5.

Comparative Example 15

| Preparation of Electrocoat Bath 15 | |
|---|---|
| Ingredients | Parts by weight (grams) |
| Phosphated Epoxy Resin 4 | 297.1 |
| Cymel® 1156 | 32.0 |
| Acrylic Resin 2 | 11.4 |
| Pigment Paste 8 | 80.0 |
| Deionized Water | 1579.4 |

The electrocoat bath had a theoretical pigment to binder ratio of 0.25/1.0, solids content of 10%, pH of 8.6, and a conductivity of 1,350 micromhos per centimeter. The bath was ultrafiltered to a final conductivity of 640 micromhos per centimeter and a pH of 8.55.

Comparative Example 16

| Preparation of Electrocoat Bath 16 | |
|---|---|
| Ingredients | Parts by weight (grams) |
| Phosphated Epoxy Resin 4 | 297.1 |
| Cymel® 1116[1] | 32.0 |
| Acrylic Resin 2 | 11.4 |
| Pigment Paste 8 | 80.0 |
| Deionized Water | 1579.4 |

[1] Methylated/Ethylated Melamine resin from American Cyanamid Co.

The electrocoat bath had a theoretical pigment to binder ratio of 0.25/1.0, solids content of 10%, pH of 9.0, and a conductivity of 1,350 micromhos per centimeter. The bath was ultrafiltered to a final conductivity of 680 micromhos per centimeter and a pH of 8.95.

## Table 1

**Electrocoating for cure evaluation**

| Bath# | Substrate | Bath Conditions "=seconds | Cure '=minutes | Film Thickness µm | PH[1] | Acetone DR's[2] |
|---|---|---|---|---|---|---|
| 1 | EP10-NO[3] | 160v/32,2°/120" | 82,2°C/20' | 22,5-25 µm | H | 60 |
| 1 | EP10-NO | 160v/32,2°/120" | 82,2°C/60' | 22,5-25 µm | 2H | 100 |
| 1 | EP10-NO | 160v/32,2°/120" | 121,1°C/60' | 22,5-25 µm | 3H | 100 |
| 2 | Bonderite[R] 1000[4] | 150v/32,2°/90" | 82,2°C/20' | 22,5 µm | 2H | 60 |
| 2 | Bonderite[R] 1000 | 150v/32,2°/90" | 82,2°C/60' | 22,5 µm | 2H | 100 |
| 3 | EP10 NO | 150v/32,2°/120" | 82,2°C/20' | 22,5-25 µm | H | 35 |
| 3 | EP10 NO | 150v/32,2°/120" | 82,2°C/60' | 21,3-25 µm | 2H | 100 |
| 3 | EP10 NO | 150v/32,2°/120" | 121,1°C/20' | 22,5-25 µm | 3H | 100 |
| 4 | EP10 NO | 210v/32,2°/120" | 82,2°C/20' | 20-23,8 µm | H | 25 |
| 4 | EP10 NO | 210v/32,2°/120" | 82,2°C/60' | 22,5 µm | H | 60 |
| 4 | EP10 NO | 210v/32,2°/120" | 121,1°C/20' | 20-25 µm | H | 100 |
| 5 | EP10 NO | 190v/32,2°/120" | 82,2°C/20' | 22,5-27,5 µm | H | 55 |
| 5 | EP10 NO | 190v/32,2°/120" | 82,2°C/60' | 22,5-25 µm | H | 100 |
| 5 | EP10 NO | 190v/32,2°/120" | 121,1°C/20' | 22,5-27,5 µm | 3H | 100 |
| 6 | EP10 NO | 160v/32,2°/120" | 82,2°C/20' | 20-25 µm | H | 95 |
| 6 | EP10 NO | 160v/32,2°/120" | 82,2°C/60' | 20-22,5µm | 3H | 100 |
| 6 | EP10 NO | 160v/32,2°/120" | 121,1°C/20' | 22,5-25 µm | 3H | 100 |
| C-7* | EP10 NO | 175v/32,2°/120" | 82,2°C/20' | 22,5-27,5µm | HB | 20 |
| C-7 | EP10 NO | 175v/32,2°/120" | 82,2°C/20' | 20-25 µm | H | 40 |
| C-7 | EP10 NO | 175v/32,2°/120" | 121,1°C/20' | 20-25 µm | H | 50 |

| | | | | | | | |
|---|---|---|---|---|---|---|---|
| C-8* | EP10 | P60[5] | 200v/32,2°/120" | 82,2°C/20' | 25-27,5 µm | F | 15 Surface Tacky |
| C-8 | EP10 | P60 | 200v/32,2°/120" | 82,2°C/60' | 22,5-25 µm | F | 100 Slightly Surface Tacky |
| C-8 | EP10 | P60 | 200v/32,2°/120" | 121,1°C/20' | 25-27,5 µm | 2H | 100 |
| 9 | EP10 | NO | 300v/32,2°/120" | 82,2°C/20' | 25-27,5 µm | F | 65 |
| 10 | EP10 | P60 | 215v/29,4°/120" | 87,8°C/20' | 22,5 µm | H | 100 |
| 10 | EP10 | P60 | 220v/29,4°/120" | 107,2°C/20' | 22,5 µm | H | 100 |
| 10 | EP10 | P60 | 220v/29,4°/120" | 121,1°C/20' | 22,5 µm | H | 100 |
| 11 | EP10 | NO | 220v/32,2°/90" | 82,2°C/20' | 22,5-25 µm | 3H | 100 |
| 11 | EP10 | NO | 220v/32,2°/90" | 82,2°C/40' | 23,8-27,5 µm | 4H | 100 |
| 11 | EP10 | NO | 220v/32,2°/90" | 121,1°C/20' | 25-27,5 µm | 5H | 100 |
| 12 | EP10 | P60 | 160v/32,2°/90" | 82,2°C/20' | 25-27,5 µm | H | 58 |
| 12 | EP10 | P60 | 160v/32,2°/90" | 98,9°C/20' | 22,5-27,5 µm | 4H | 100 |
| 12 | EP10 | P60 | 160v/32,2°/90" | 107,2°C/20' | 22,5-27,5 µm | 4H | 100 |
| 12 | EP10 | P60 | 160v/32,2°/90" | 121,1°C/20' | 25-27,5 µm | 4H | 100 |
| C-13* | EP10 | P60 | 140v/32,2°/90" | 98,9°C/20' | 20-23,8 µm | no test | 80 |
| C-13 | EP10 | P60 | 140v/32,2°/90" | 107,2°C/20' | 20-25 µm | no test | 100 |
| C-13 | EP10 | P60 | 140v/32,2°/90" | 121,1°C/20' | 20-23,8 µm | no test | 100 |
| 14 | EP10 | P60 | 180v/32,2°/90" | 82,2°C/20' | 20-25 µm | no test | 100 |
| 14 | EP10 | P60 | 180v/32,2°/90" | 98,9°C/20' | 20-25 µm | no test | 100 |
| 14 | EP10 | P60 | 180v/32,2°/90" | 107,2°C/20' | 20-23,8 µm | no test | 100 |
| 14 | EP10 | P60 | 180v/32,2°/90" | 121,1°C/20' | 22,5-25 µm | 3H | 100 |
| C-15* | EP10 | P60 | 200v/32,2°/90" | 98,9°C/20' | 21,3-25 µm | no test | 100 |
| C-15 | EP10 | P60 | 200v/32,2°/90" | 107,2°C/20' | 20-25 µm | no test | 100 |
| C-15 | EP10 | P60 | 200v/32,2°/90" | 121,1°C/20' | 21,3-25 µm | 5H | 100 |

| | | | | | | | |
|---|---|---|---|---|---|---|---|
| C-16* | EP10 | P60 | 180v/32,2°/90" | 82,2°C/20' | 20-23,8 µm | 2H | 100 |
| C-16 | EP10 | P60 | 180v/32,2°/90" | 98,9°C/20' | 21,3-23,8 µm | 4H | 100 |
| C-16 | EP10 | P60 | 180v/32,2°/90" | 107,2°C/20' | 20-22,5 µm | 4H | 100 |
| C-16 | EP10 | P60 | 180v/32,2°/90" | 121,1°C/20' | 20-22,5 µm | 4H | 100 |

* Comparative Example

1 pencil hardness

2 Acetone double rubs are used as a measure of solvent resistance and an indication of cure. A cloth wipe is soaked with acetone and using the index finger of one's hand the film is rubbed vigorously rewetting the cloth every 20 double rubs until the film is removed or 100 double rubs has occurred.

3 Unpolished iron phosphated steel with no sealer rinse available from Advanced Coatings Technologies.

4 Polished iron phosphated steel with Parcolene® 60 and Deionized Water rinse available from Parker Chemical Company.

5 Polished iron phosphated steel with Parcolene® 60 and Deionized Water rinse available from Advanced Coatings Technologies.

It can be seen from the above Table, the films of the invention cure to provide solvent resistant, hard and non-tacky films.

Table II

Corrosion Resistance Evaluations

| Electrocoat bath# | Substrate | Cure Conditions °C/minutes | Hours Test | Ave. Scribe Creepage/cm (inches) |
|---|---|---|---|---|
| 1 | EP10 P60 | 82,2/20' | 240 | 0,318 (1/8") |
| | EP10 P60 | 82,2/60' | 240 | 0,318 (1/8") |
| | EP10 P60 | 121,1/20' | 240 | 0,238 (3/32") |
| 2 | Bonderite 1000 | 82,2/20' | 300 | 0,238 (3/32") |
| | Bonderite 1000 | 82,2/60' | 300 | 0,159 (1/16") |
| 3 | EP10 P60 | 82,2/20' | 240 | 0,159-0,238 (1/16"-3/32") |
| | EP10 P60 | 82,2/60' | 240 | 0,318 (1/8") |
| | EP10 P60 | 121,1/20' | 240 | 0,079-0,159 (1/32"-1/16") |
| 4 | EP10 P60 | 82,2/20' | 240 | 0,238 (3/32") |
| | EP10 P60 | 82,2/60' | 240 | 0,238 (3/32") |
| | EP10 P60 | 121,1/20' | 240 | 0,159 (1/16") |
| 5 | EP10 P60 | 82,2/20' | 240 | 0,238 (3/32") |
| | EP10 P60 | 82,2/60' | 240 | 0,238 (3/32") |
| | EP10 P60 | 121,1/20' | 240 | 0,159 (1/16") |
| 6 | EP10 P60 | 82,2/20' | 240 | 0,238 (3/32") |
| | EP10 P60 | 82,2/60' | 240 | 0,238 (3/32") |
| | EP10 P60 | 121,1/20' | 240 | 0,159 (1/16") |
| C-7* | EP10 P60 | 82,2/20' | 240 | Total Delamination |
| | EP10 P60 | 82,2/60' | 240 | Total Delamination |
| | EP10 P60 | 121,1/20' | 240 | 1.27 (1/2") |
| C-8* | EP10 NO | 82,2/20' | 240 | 0,953 (3/8")(Slightly Tacky) |
| | EP10 NO | 82,2/60' | 240 | 0,794 (5/16")(Slightly Tacky) |
| | EP10 NO | 121,1/20' | 240 | 0,635 (1/4") |

| | | | | |
|---|---|---|---|---|
| 9 | EP10 NO | 82,2/20' | 150 | 1,27 (1/2") |
| | EP10 NO | 82,2/60' | 150 | 0,312 (10/32") |
| 10 | EP10 NO | 87,8/20' | 240 | 0,476 (3/16") |
| | EP10 NO | 107,2/20' | 240 | 0,318 (1/8") |
| | EP10 NO | 121,1/20' | 240 | 0,159 (1/16") |
| 11 | EP10 NO | 82,2/20' | 150 | 0,556 (7/32") |
| | EP10 NO | 82,2/40' | 150 | 0,476 (6/32") |
| | EP10 NO | 121,1/20' | 150 | 0,318 (4/32") |

The cured panels were subjected to salt spray testing as defined in ASTM D-1654 (Method B). Prior to the salt spray testing the electrodeposited and cured film had an "X" shape scribe cut through it, and to the metal surface with a carbide tip scribing tool. Over commonly used substrates such as Bonderite 1000, the coated substrate showed acceptable scribe-creepage.

Evaluation of Color Change

Electrocoated films from electrocoat bath 11[1] on Bonderite® 40-P60[2] panels were measured to evaluate overbake color stability and higher temperature curing effects. A MacBeth Color Eye M52020 Spectrophotometer manufactured by the MacBeth Division of Kollmorgen Instruments Corporation was employed. CIE L*. a*, and b* color coordinates were calculated using the CII illuminant C and the 1964 10° supplementary standard observer. Color differences (DE*) between the experimental and control coatings were calculated using the CIE 1976 Uniform Color Space (CIELAB)[3]. A just perceptible color difference is about 0.5 CIELAB Color difference units. Commercially acceptable color difference is often about 1.0

CIELAB color difference units. The gloss of the tested films was about 15-20 on a 60° gloss meter.

Table III

| Control | Experimental | Da* | Db* | DL* | DE*[4] |
|---|---|---|---|---|---|
| 82,2°C (180°F)/20' | 82,2°C (180°F)/40' | -0.08 | +0.25 | -0.04 | +0.26 |
| 121,1°C (250°F)/20' | 121,1°C (250°F)/40' | -0.04 | +0.53 | +0.10 | +0.55 |
| 162,8°C (325°F)/20' | 162,8°C (325°F)/40' | -0.14 | +0.89 | -0.14 | +0.91 |
| 176,7°C (350°F)/20' | 176,7°C (350°F)/40' | -0.09 | +0.37 | -0.40 | +0.55 |
| 82,2°C (180°F)/20' | 121,1°C (250°F)/20' | -0.08 | +0.33 | +0.11 | +0.35 |
| 82,2°C (180°F)/20' | 162,8°C (325°F)/20' | -0.23 | +0.95 | -0.56 | +1.12 |

[1] films coated at 210 volts at 32,2°C (90°F) for 90 seconds with 25,4-27,9 µm (1.0-1.10 mil) films obtained.
[2] polished zinc phosphated steel with Parcolene® 60 and deionized water rinse available from Parker Chemical Company.
[3] CIE Publication No. 15.2, Colorimetry, Bureau Central de 1a CIE, Vienna (1986)
[4] ΔE*ab = DE*, ΔL* = DL*, Δa* = Da*, Δb* = Db*

**Claims**
**Claims for the following Contracting States : AT, BE, DE, FR, GB, IT, NL, SE**

**1.** A curable, anionic electrodepositable composition comprising an aqueous dispersion of a base-neutralized resinous composition containing:
(a) 50 to 90 weight percent of a phosphated epoxy resin on a resin solids basis,
(b) 10 to 50 weight percent of an aminoplast resin, based on total resin solid
**characterized in that,**
the aminoplast resin (b) having substituted thereon a combination of low alkoxy groups having 1 to 2 carbon atoms and high alkoxy groups having 3 to 6 carbon atoms resulting in a low temperature curable, ultrafiltration insensitive coating composition.

**2.** The curable anionic electrodepositable composition of claim 1 which further comprises a coalescing agent.

**3.** The curable anionic electrodepositable composition of claim 1 wherein the phosphated epoxy resin (a) is derived from an epoxy resin selected from the group consisting of polyglycidyl ethers of polyphenols, an epoxy functional acrylic resin, a novolac resin or mixtures thereof.

**4.** The curable anionic electrodepositable composition of claim 1 wherein the phosphated epoxy resin (a) is derived from phosphated epoxy functional ethylenically unsaturated monomers.

**5.** The curable anionic electrodepositable composition of claim 1 wherein the low alkoxy group of the aminoplast resin (b) is a methoxy or an ethoxy group.

**6.** The curable anionic electrodepositable composition of claim 1 wherein the high alkoxy group of the aminoplast resin (b) is a propoxy or a butoxy group.

**7.** The curable anionic electrodepositable composition of claim 1 which further comprises a phenolic resin.

**8.** The curable anionic electrodepositable composition of claim 1 which further comprises an acrylic resin.

**9.** A process for providing a coating on a conductive substrate by passing an electric current between the substrate acting as an anode, and cathode in contact with an electrodeposition bath containing an aqueous dispersion of a base-neutralized resinous composition containing:
(a) 50 to 90 weight percent of a phosphated epoxy resin on a resin solids basis,

(b) 10 to 50 weight percent of an aminoplast resin based on total resin solid

**characterized by**

using an aminoplast resin (b) having substituted thereon a combination of low alkoxy groups having 1 to 2 carbon atoms and high alkoxy groups having 3 to 6 carbon atoms, and heating the coated substrate to a temperature of less than 107,2 °C (225 ° Fahrenheit) over 20 to 60 minutes.

**10.** The process, as claimed in claim 9, wherein said composition further comprises an acrylic resin.

**11.** The process, as claimed in claim 9, wherein in said aminoplast resin (b) said low alkoxy groups are methoxy or ethoxy and said high alkoxy groups are propoxy or butoxy.

**12.** The process, as claimed in claim 9, wherein said composition further comprises a phenolic resin.

**Claims for the following Contracting State : ES**

**1.** A process for preparing a curable, anionic electrodepositable composition comprising an aqueous dispersion of a base-neutralized resinous composition containing:

(a) 50 to 90 weight percent of a phosphated epoxy resin on a resin solids basis,

(b) 10 to 50 weight percent of an aminoplast resin, based on total resin solid

**characterized in that,**

the aminoplast resin (b) having substituted thereon a combination of low alkoxy groups having 1 to 2 carbon atoms and high alkoxy groups having 3 to 6 carbon atoms resulting in a low temperature curable, ultrafiltration insensitive coating composition.

**2.** The process of claim 1 wherein the curable anionic electrodepositable composition further comprises a coalescing agent.

**3.** The process of claim 1 wherein the phosphated epoxy resin (a) of the curable, anionic electrodepositable composition is derived from an epoxy resin selected from the group consisting of polyglycidyl ethers of polyphenols, an epoxy functional acrylic resin, a novolac resin or mixtures thereof.

**4.** The process of claim 1 wherein the phosphated epoxy resin (a) of the curable anionic electrodepositable composition is derived from phosphated epoxy functional ethylenically unsaturated monomers.

**5.** The process of claim 1 wherein the low alkoxy group of the aminoplast resin (b) of the curable anionic electrodepositable composition is a methoxy or an ethoxy group.

**6.** The process of claim 1 wherein the high alkoxy group of the aminoplast resin (b) of the curable anionic electrodepositable composition is a propoxy or a butoxy group.

**7.** The process of claim 1 wherein the curable anionic electrodepositable composition further comprises a phenolic resin.

**8.** The process of claim 1 wherein the curable anionic electrodepositable composition further comprises an acrylic resin.

**9.** A process for providing a coating on a conductive substrate by passing an electric current between the substrate acting as an anode, and cathode in contact with an electrodeposition bath containing an aqueous dispersion of a base-neutralized resinous composition containing:

(a) 50 to 90 weight percent of a phosphated epoxy resin on a resin solids basis,

(b) 10 to 50 weight percent of an aminoplast resin based on total resin solid

**characterized by**

using an aminoplast resin (b) having substituted thereon a combination of low alkoxy groups having 1 to 2 carbon atoms and high alkoxy groups having 3 to 6 carbon atoms, and heating the coated substrate to a temperature of less than 107,2 °C (225 ° Fahrenheit) over 20 to 60 minutes.

10. The process, as claimed in claim 9, wherein said composition further comprises an acrylic resin.

11. The process, as claimed in claim 9, wherein in said aminoplast resin (b) said low alkoxy groups are methoxy or ethoxy and said high alkoxy groups are propoxy or butoxy.

12. The process, as claimed in claim 9, wherein said composition further comprises a phenolic resin.

**Patentansprüche**
**Patentansprüche für folgende Vertragsstaaten : AT, BE, DE, FR, GB, IT, NL, SE**

1. Aushärtbare, anionisch galvanisch abscheidbare Zusammensetzung mit einer wässrigen Dispersion einer durch eine Base neutralisierten Harzzusammensetzung, enthaltend
   (a) 50 bis 90 Gew.% phosphatiertes Epoxidharz, bezogen auf den Harzfeststoff,
   (b) 10 bis 50 Gew.% eines Aminoplastharzes, bezogen auf den gesamten Harzfeststoff,
   **dadurch gekennzeichnet, daß**
   das Aminoplastharz (b) mit einer Kombination von niederen Alkoxygrupen mit 1 bis 2 Kohlenstoffatomen und höheren Alkoxygruppen mit 3 bis 6 Kohlenstoffatomen substituiert ist, wobei eine bei niedriger Temperatur aushärtbare gegenüber Ultrafiltration unempfindliche Überzugsmasse erhalten wird.

2. Aushärtbare, anionisch galvanisch abscheidbare Zusammensetzung nach Anspruch 1, die weiterhin ein Koaleszenzmittel enthält.

3. Aushärtbare, anionisch galvanisch abscheidbare Zusammensetzung nach Anspruch 1, bei der das phosphatierte Epoxidharz (a) erhalten ist aus einem Epoxidharz, ausgewählt aus der Gruppe, bestehend aus Polyglycidylethern von Polyphenolen, einem Epoxy-funktionellen Acrylharz, einem Novolakharz oder Mischungen daraus.

4. Aushärtbare, anionisch galvanisch abscheidbare Zusammensetzung nach Anspruch 1, bei der das phosphatierte Epoxidharz (a) erhalten ist aus phosphatierten Epoxyfunktionellen, ethylenisch ungesättigten Monomeren.

5. Aushärtbare, anionisch galvanisch abscheidbare Zusammensetzung nach Anspruch 1, bei der die niedere Alkoxygruppe des Aminoplastharzes (b) eine Methoxy- oder Ethoxygruppe ist.

6. Aushärtbare, anionisch galvanisch abscheidbare Zusammensetzung nach Anspruch 1, bei der die höhere Alkoxygruppe des Aminoplastharzes (b) eine Propoxy- oder eine Butoxygruppe ist.

7. Aushärtbare, anionisch galvanisch abscheidbare Zusammensetzung nach Anspruch 1, welche weiterhin ein Phenolharz enthält.

8. Aushärtbare, anionisch galvanisch abscheidbare Zusammensetzung nach Anspruch 1, welche weiterhin ein Acrylharz enthält.

9. Verfahren zur Erzeugung eines Überzugs auf einem leitfähigen Substrat durch Hindurchleiten von elektrischem Strom zwischen dem als Anode wirkenden Substrat und einer Kathode in Kontakt mit dem galvanischen Bad, welches eine wässrige Dispersion einer durch eine Base neutralisierten harzigen Zusammensetzung enthält, bestehend aus
   (a) 50 bis 90 Gew.% eines phosphatierten Epoxidharz, bezogen auf den Harzfeststoff,
   (b) 10 bis 50 Gew.% eines Aminoplastharzes, bezogen auf den gesamten Harzfeststoff,
   **gekennzeichnet durch** Verwendung eines Aminoplastharzes (b), das mit einer Kombination von niederen Alkoxygrupen mit 1 bis 2 Kohlenstoffatomen und höheren Alkoxygruppen mit 3 bis 6 Kohlenstoffatomen substituiert ist, und Erwärmen des überzogenen Substrats auf eine Temperatur von weniger als 107,2 °C (225 ° F.) über einen Zeitraum von 20 bis 60 Minuten.

10. Verfahren nach Anspruch 9, bei dem die Zusammensetzung ferner ein Acrylharz enthält.

11. Verfahren nach Anspruch 9, bei dem in dem Aminoplastharz (b) die niederen Alkoxygruppen Methoxy oder Ethoxy und die höheren Alkoxygruppen Propoxy oder Butoxy sind.

12. Verfahren nach Anspruch 9, bei dem die Zusammensetzung ferner ein Phenolharz enthält.

**Patentansprüche für folgenden Vertragsstaat : ES**

1. Verfahren zur Herstellung einer aushärtbaren, anionisch galvanisch abscheidbaren Zusammensetzung mit einer wässrigen Dispersion einer durch eine Base neutralisierten Harzzusammensetzung, enthaltend
   (a) 50 bis 90 Gew.% phosphatiertes Epoxidharz, bezogen auf den Harzfeststoff,
   (b) 10 bis 50 Gew.% eines Aminoplastharzes, bezogen auf den gesamten Harzfeststoff,
   **dadurch gekennzeichnet, daß**
   das Aminoplastharz (b) mit einer Kombination von niederen Alkoxygrupen mit 1 bis 2 Kohlenstoffatomen und höheren Alkoxygruppen mit 3 bis 6 Kohlenstoffatomen substituiert ist, wobei eine bei niedriger Temperatur aushärtbare gegenüber Ultrafiltration unempfindliche Überzugsmasse erhalten wird.

2. Verfahren zur Herstellung nach Anspruch 1, worin die aushärtbare, anionisch galvanisch abscheidbare Zusammensetzung weiterhin ein Koaleszenzmittel enthält.

3. Verfahren zur Herstellung nach Anspruch 1, bei dem das phosphatierte Epoxidharz (a) der aushärtbaren, anionisch galvanisch abscheidbaren Zusammensetzung erhalten ist aus einem Epoxidharz, ausgewählt aus der Gruppe, bestehend aus Polyglycidylethern von Polyphenolen, einem Epoxy-funktionellen Acrylharz, einem Novolakharz oder Mischungen daraus.

4. Verfahren zur Herstellung nach Anspruch 1, bei dem das phosphatierte Epoxidharz (a) der aushärtbaren, anionisch galvanisch abscheidbaren Zusammensetzung erhalten ist aus phosphatierten Epoxyfunktionellen, ethylenisch ungesättigten Monomeren.

5. Verfahren zur Herstellung nach Anspruch 1, bei der die niedere Alkoxygruppe des Aminoplastharzes (b) der aushärtbaren, anionisch galvanisch abscheidbaren Zusammensetzung eine Methoxy- oder Ethoxygruppe ist.

6. Verfahren zur Herstellung nach Anspruch 1, bei der die höhere Alkoxygruppe des Aminoplastharzes (b) der aushärtbaren, anionisch galvanisch abscheidbaren Zusammensetzung eine Propoxy- oder eine Butoxygruppe ist.

7. Verfahren zur Herstellung nach Anspruch 1, worin die aushärtbare, anionisch galvanisch abscheidbare Zusammensetzung weiterhin ein Phenolharz enthält.

8. Verfahren zur Herstellung nach Anspruch 1, worin die aushärtbare, anionisch galvanisch abscheidbare Zusammensetzung weiterhin ein Acrylharz enthält.

9. Verfahren zur Erzeugung eines Überzugs auf einem leitfähigen Substrat durch Hindurchleiten von elektrischem Strom zwischen dem als Anode wirkenden Substrat und einer Kathode in Kontakt mit dem galvanischen Bad, welches eine wässrige Dispersion einer durch eine Base neutralisierten harzigen Zusammensetzung enthält, bestehend aus
   (a) 50 bis 90 Gew.% eines phosphatierten Epoxidharz, bezogen auf den Harzfeststoff,
   (b) 10 bis 50 Gew.-% eines Aminoplastharzes, bezogen auf den gesamten Harzfeststoff,
   **gekennzeichnet durch** Verwendung eines Aminoplastharzes (b), das mit einer Kombination von niederen Alkoxygrupen mit 1 bis 2 Kohlenstoffatomen und höheren Alkoxygruppen mit 3 bis 6 Kohlenstoffatomen substituiert ist, und Erwärmen des überzogenen Substrats auf eine Temperatur von weniger als 107,2 ° C (225 ° F.) über einen Zeitraum von 20 bis 60 Minuten.

10. Verfahren nach Anspruch 9, bei dem die Zusammensetzung ferner ein Acrylharz enthält.

11. Verfahren nach Anspruch 9, bei dem in dem Aminoplastharz (b) die niederen Alkoxygruppen Methoxy oder Ethoxy und die höheren Alkoxygruppen Propoxy oder Butoxy sind.

12. Verfahren nach Anspruch 9, bei dem die Zusammensetzung ferner ein Phenolharz enthält.

**Revendications**
**Revendications pour les Etats contractants suivants : AT, BE, DE, FR, GB, IT, NL, SE**

1. Composition électrodéposable à l'anode réticulable contenant une composition résineuse neutralisée par une base en dispersion aqueuse comprenant :
   (a) 50 à 90 % en poids d'une résine époxy phosphatée par rapport aux résines solides,
   (b) 10 à 50 % en poids d'une résine aminoplaste par rapport au total de résines solides,
   caractérisée en ce que la résine aminoplaste (b) qui a de façon substituée sur elle une combinaison de groupes alcoxy inférieurs ayant 1 à 2 atomes de carbone et des groupes alcoxy supérieurs ayant 3 à 6 atomes de carbone donnant une composition de revêtement insensible à l'ultrafiltration et réticulable à basse température.

2. Composition électrodéposable à l'anode réticulable selon la revendication 1 qui comprend en outre un agent coalescent.

3. Composition électrodéposable à l'anode réticulable selon la revendication 1, dans laquelle la résine phosphatée époxy (a) dérive d'une résine époxy choisie dans le groupe constitué des éthers polyglycidyliques de polyphénols, d'une résine acrylique à fonction époxy, d'une résine novolaque ou de leurs mélanges.

4. Composition électrodéposable à l'anode réticulable selon la revendication 1, dans laquelle la résine époxy phosphatée (a) dérive de monomères phosphatés à insaturation éthylénique à fonction époxy.

5. Composition électrodéposable à l'anode réticulable selon la revendication 1, dans laquelle le groupe alcoxy inférieur de la résine aminoplaste (b) est un groupe méthoxy ou un groupe éthoxy.

6. Composition électrodéposable à l'anode réticulable selon la revendication 1, dans laquelle le groupe alcoxy supérieur de la résine aminoplaste (b) est un groupe propoxy ou un groupe butoxy.

7. Composition électrodéposable à l'anode réticulable selon la revendication 1 qui comprend en outre une résine phénolique.

8. Composition électrodéposable à l'anode réticulable selon la revendication 1 qui comprend en outre une résine acrylique.

9. Procédé de fourniture d'un revêtement sur un substrat conducteur en faisant passer un courant électrique entre le substrat fonctionnant comme une anode et une cathode en contact avec un bain d'électrodéposition contenant une dispersion aqueuse d'une composition résineuse neutralisée par une base contenant :
   (a) 50 à 90 % en poids d'une résine époxy phosphatée par rapport aux résines solides,
   (b) 10 à 50 % en poids d'une résine aminoplaste par rapport au total des résines solides,
   caractérisé en ce qu'on utilise une résine aminoplaste (b) qui possède comme substituant une combinaison de groupes alcoxy inférieurs ayant 1 à 2 atomes de carbone et de groupes alcoxy supérieurs ayant 3 à 6 atomes de carbone, et on chauffe le substrat revêtu à une température inférieure à 107,2 °C (225 °F) entre 20 et 60 min.

10. Procédé selon la revendication 9, dans lequel ladite composition comprend en outre une résine acrylique.

11. Procédé selon la revendication 9, dans lequel, dans ladite résine aminoplaste (b), lesdits groupes alcoxy inférieurs sont des méthoxy ou éthoxy et lesdits groupes alcoxy supérieurs sont des propoxy ou butoxy.

12. Procédé selon la revendication 9, dans lequel ladite composition comprend en outre une résine phénolique.

**Revendications pour l'Etat contractant suivant : ES**

**1.** Procédé de préparation d'une composition électrodéposable à l'anode réticulable contenant une composition résineuse neutralisée par une base en dispersion aqueuse comprenant :

(a) 50 à 90 % en poids d'une résine époxy phosphatée par rapport aux résines solides,

(b) 10 à 50 % en poids d'une résine aminoplaste par rapport au total de résines solides,

caractérisé en ce que la résine aminoplaste (b) qui a de façon substituée sur elle une combinaison de groupes alcoxy inférieurs ayant 1 à 2 atomes de carbone et des groupes alcoxy supérieurs ayant 3 à 6 atomes de carbone donnant une composition de revêtement insensible à l'ultrafiltration et réticulable à basse température.

**2.** Procédé selon la revendication 1, dans lequel la composition électrodéposable à l'anode réticulable comprend en outre un agent coalescent.

**3.** Procédé selon la revendication 1, dans lequel la résine phosphatée époxy (a) de la composition électrodéposable à l'anode réticulable dérive d'une résine époxy choisie dans le groupe constitué des éthers polyglycidyliques de polyphénols, d'une résine acrylique à fonction époxy, d'une résine novolaque ou de leurs mélanges.

**4.** Procédé selon la revendication 1, dans lequel la résine époxy phosphatée (a) de la composition électrodéposable à l'anode réticulable dérive de monomères phosphatés à insaturation éthylénique à fonction époxy.

**5.** Procédé selon la revendication 1, dans lequel le groupe alcoxy inférieur de la résine aminoplaste (b) de la composition électrodéposable à l'anode réticulable est un groupe méthoxy ou un groupe éthoxy.

**6.** Procédé selon la revendication 1, dans lequel le groupe alcoxy supérieur de la résine aminoplaste (b) de la composition électrodéposable à l'anode réticulable est un groupe propoxy ou un groupe butoxy.

**7.** Procédé selon la revendication 1, dans lequel la composition électrodéposable à l'anode réticulable comprend en outre une résine phénolique.

**8.** Procédé selon la revendication 1, dans lequel la composition électrodéposable à l'anode réticulable comprend en outre une résine acrylique.

**9.** Procédé de fourniture d'un revêtement sur un substrat conducteur en faisant passer un courant électrique entre le substrat fonctionnant comme anode et une cathode en contact avec un bain d'électrodéposition contenant une dispersion aqueuse d'une composition résineuse neutralisée par une base contenant :

(a) 50 à 90 % en poids d'une résine époxy phosphatée par rapprot aux résines solides,

(b) 10 à 50 % en poids d'une résine aminoplaste par rapport au total des résines solides

caractérisé en ce qu'on utilise une résine aminoplaste (b) qui possède comme substituant une combinaison de groupes alcoxy inférieurs ayant 1 à 2 atomes de carbone et de groupes alcoxy supérieurs ayant 3 à 6 atomes de carbone, et on chauffe le substrat revêtu à une température inférieure à 107,2 ° C (225 ° F) entre 20 et 60 min.

**10.** Procédé selon la revendication 9, dans lequel ladite composition comprend en outre une résine acrylique.

**11.** Procédé selon la revendication 9, dans lequel dans ladite résine aminoplaste (b) lesdits groupes alcoxy inférieurs sont des méthoxy ou éthoxy et lesdits groupes alcoxy supérieurs sont des propoxy ou butoxy.

**12.** Procédé selon la revendication 9, dans lequel ladite composition comprend en outre une résine phénolique.